# EUROPEAN PATENT APPLICATION

(11) **EP 1 634 935 A1**
(43) Date of publication of application: **15.03.2006**
(21) Application number: 04735999.7
(22) Date of filing: 03.06.2004
(51) Int. Cl.: C09J 4/00, C09J 157/00, C09J 7/00

(54) **RADIATION-CURABLE PRESSURE-SENSITIVE ADHESIVE COMPOSITION AND PRESSURE-SENSITIVE ADHESIVE SHEETS**

(30) Priority: 05.06.2003 JP 2003161350
(71) Applicant: TOAGOSEI CO., LTD., Tokyo 105-8419 (JP)
(72) Inventor: KAMIYA, Daisuke c/o Toagosei Co., Ltd., Nagoya-shi,Aichi 455-0027 (JP); OKAZAKI, Eiichi c/o Toagosei Co., Ltd., Nagoya-shi, Aichi 455-0027 (JP)
(74) Representative: Pohlmann, Eckart
(86) International application number: PCT/JP2004/008049
(87) International publication number: WO 2004/108850

(57) **Abstract**

The present invention relates to a pressure-sensitive adhesive curable with active energy beams which is useful as a pressure-sensitive adhesive and a pressure-sensitive adhesive sheet. The present invention has been made for the purpose of finding an active energy beam-curable pressure-sensitive adhesive, which is liquid at ordinary temperature, and has practical crosslinkability and curability in the absence of a photopolymerization initiator even when irradiated with visible or ultraviolet light, and gives a cured coating film which does not suffer from discoloration but is excellent in various pressure-sensitive adhesive performances as well as water resistance and heat resistance. The present invention provides a composition comprising a plurality of compounds which each have two or more maleimide groups and are liquid at ordinary temperature, wherein the plurality of compounds comprise (A) a compound having maleimide groups represented by the following formula (1), and (B) a compound having maleimide groups represented by the following formula (2), and/or a compound having maleimide groups represented by the following formula (3). 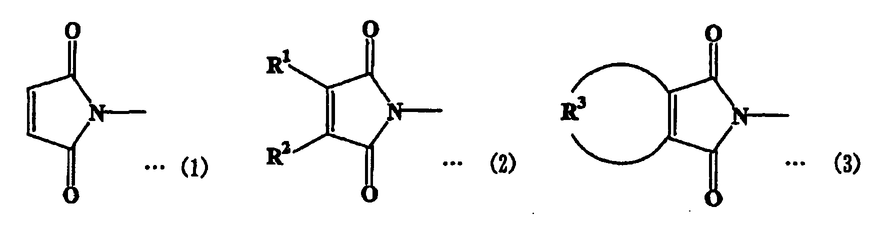
where in formula (2) R¹ and R² each represent an alkyl group, an aryl group, an arylalkyl group or a halogen atom; and in formula (3), R³ represents a propylene group or butylene group which may be substituted.

## Description

### Technical Field

The present invention relates to a pressure-sensitive adhesive composition curable with active energy beams, which is composed of a plurality of compounds containing two or more maleimide groups having a specific structure, and a pressure-sensitive adhesive sheet having an adhesive layer formed of the above described composition, which can be utilized with admiration in the relevant technical fields.

### Background Art

Pressure-sensitive adhesives are processed into pressure-sensitive adhesive products and used for various applications such as pressure-sensitive adhesive tapes, pressure-sensitive adhesive labels and pressure-sensitive adhesive double coated tapes; in these years, their further improvement in performance is demanded. Particularly, for use in adhesion of interior or exterior parts of vehicles, electric appliances and houses, mutual adhesion of electronic parts or the like, they are required to have excellent water resistance and high pressure-sensitive adhesiveness, namely, performances such that they can adhere under low compression at room temperature but do not peel off when allowed to stand at high temperature.

Additionally, pressure-sensitive adhesives used for first aid plasters, magnetic plasters, surgical tapes, wound-healing dressing materials (dressings), athletic tapes, tape preparations for transdermal therapeutic systems and the like are required to be high in safety because these articles are directly affixed to the skin.

For use in which heat resistance is required, pressure-sensitive adhesive products using silicone based pressure-sensitive adhesives have been investigated, but have not yet been widely used because they are problematic in that there are no excellent release materials to be associated with these products, and require use of expensive raw materials, thereby increasing the cost.

On the other hand, pressure-sensitive adhesives that are widely used are solvent based pressure-sensitive adhesives comprising acrylic polymers and rubber-based resins including SIS and SEBS dissolved in organic solvents; these pressure-sensitive adhesives are excellent in water resistance, and additionally excellent in balance of adhesive properties, and thus various investigations have been performed so as to meet the above described properties.

However, there is a fear that the solvent based pressure-sensitive adhesives might have an adverse environmental effect due to organic solvents evolved when processed into pressure-sensitive adhesive products, and additionally have an adverse effect on safety due to residual solvents contained in coating films of the pressure-sensitive adhesives. Thus, in these years, pressure-sensitive adhesives using no organic solvents come to be demanded.

As an alternative for solvent based pressure-sensitive adhesives, active energy beam-curable pressure-sensitive adhesives, which are curable with active energy beams such as visible and ultraviolet light, have been investigated because they are excellent in water resistance and heat resistance, easy to handle owing to low viscosity, and adaptable to coating devices that have been used for the solvent based adhesives.

Generally, compositions curable with active energy beams including pressure-sensitive adhesives curable with active energy beams are not crosslinked or curable as raw materials per se, and hence it is necessary to add a photopolymerization initiator or a photosensitizer (hereinafter, these are collectively referred to as photopolymerization initiator or the like).

The greater the addition amount of the photopolymerization initiator or the like is, the quicker the curing is; and thus, the addition amount is apt to be increased. However, the photopolymerization initiator or the like includes a compound having an aromatic ring so as to absorb light efficiently, thereby causing a problem of yellowing of the resultant cured films.

Additionally, the photopolymerization initiator or the like is usually composed of a low molecular weight compound so as to efficiently initiate polymerization reaction. However, when such a composition is irradiated with an active energy beam, the temperature is elevated owing to polymerization heat, and thus the low molecular weight photopolymerization initiator or the like, which is high in vapor pressure, causes problems such that malodor is generated markedly at the time of curing, thereby causing a problem of working environment, or the obtained products are contaminated. Additionally, there are problems in that decomposition products including an unreacted photopolymerization initiator and the like remain in the cured films, and hence, when the cured films are subjected to light or heat, there often occurs a problem such that the cured films turn yellow, or unfavorable odor is generated.

Furthermore, when the cured films are allowed to stay in water or the like, or the cured films are touched with sweat and the like excreted from human body, the unreacted photopolymerization initiator or the like bleeds out in a large quantity, and hence there occurs a problem of safety and health.

For the purpose of overcoming the drawbacks of the active energy beam-curable compositions that contain the aforementioned photopolymerization initiator or the like, there have been investigated compositions containing neither photopolymerization initiator nor the like but curable by irradiation with active energy beams (for example, Patent Document 1, Patent Document 2, Patent Document 3 and Patent Document 4).

However, when compositions that contain compounds having maleimide groups disclosed in Patent Documents 1 and 2 are used as pressure-sensitive adhesives, they often cause gelation if they are stored at a high temperature, or the cured films are poor in water resistance, namely, they deteriorate in adhesive strength and peel off if they are soaked in warm water for a long time.

On the other hand, compositions that contain compounds having maleimide groups disclosed in Patent Documents 3 and 4 are both adhesives the cured coating films of which have no tackiness or are poor in tackiness, so that they are hardly usable as pressure-sensitive adhesives. Additionally, the maleimide group-containing compound disclosed in Patent Document 4 is crystalline with a melting point of 40°C or above, and is not liquid at ordinary temperature, so that it is particularly poor in tackiness and hardly usable as a pressure-sensitive adhesive.

The present inventors have made intensive researches for the purpose of finding an active energy beam-curable pressure-sensitive adhesive which is liquid at ordinary temperature, and has a practical crosslinking property or curability in the absence of photopolymerization initiators even when irradiated with visible or ultraviolet light, and provides cured films that do not change color but are excellent in water resistance and heat resistance as well as various pressure-sensitive adhesive performances. Consequently the present inventors have proposed that an active energy beam-curable pressure-sensitive adhesive comprising a compound having one or more maleimide groups of a specific structure is effective (Patent Document 5).

The present inventors have now made intensive researches for the purpose of finding an active energy beam-curable pressure-sensitive adhesive capable of solving the above described problems by means that are different from the pressure-sensitive adhesive described in Patent Document 5.
· Patent Document 1: Japanese Patent Laid-Open No. H11-124403A (Claims)
· Patent Document 2: Japanese Patent Laid-Open No. H11-124404A (Claims)
· Patent Document 3: Japanese Patent Laid-Open No. 2001-219508A (Claims)
· Patent Document 4: Japanese Patent Laid-Open No. 2001-220567A (Claims)
· Patent Document 5: Japanese Patent Application No. 2002-054983 specification (Claims)

### Disclosure of the Invention

The present inventors have performed various investigations for the purpose of solving the above described problems, and consequently have accomplished the present invention by finding out that a pressure-sensitive adhesive containing a plurality of compounds having two or more maleimide groups can solve the above described problems.

Hereinafter, detailed description of the present invention will be made.

### 1. Compounds having two or more maleimide groups

The pressure-sensitive adhesive composition (hereinafter simply referred to as a pressure-sensitive adhesive as the case may be) of the present invention is a composition comprising a plurality of compounds each having two or more maleimide groups and being liquid at ordinary temperature, wherein the plurality of compounds comprise, as indispensable compounds, (A) a compound having the maleimide groups represented by the following formula (1) (hereinafter simply referred to as the component (A)), and (B) a compound having the maleimide groups represented by the following formula (2) and/or a compound having the maleimide groups represented by the following formula (3) (hereinafter simply referred to as the component (B)). The compound having maleimide groups represented by the following formula (2) will be referred to as the component (B-1), while the compound having maleimide groups represented by the following formula (3) will be simply referred to as the component (B-2). 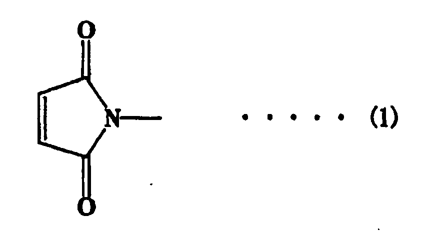 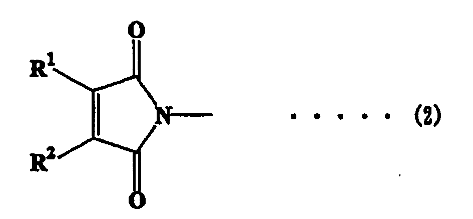
In formula (2), R¹ and R² each represent an alkyl group, an aryl group, an arylalkyl group or a halogen atom. 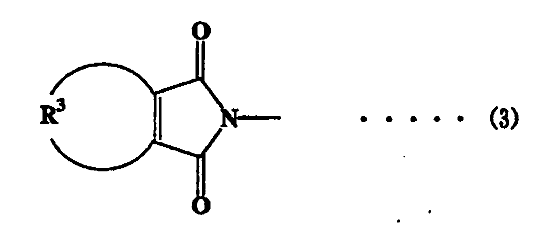
In formula (3), R³ represents a propylene or butylene group which may be substituted.

In above formula (2), the alkyl groups, as R¹ and R², each are preferably a group having 4 or less carbon atoms, and particularly preferably a methyl group. Examples of an aryl group include a phenyl group. Examples of an arylalkyl group include a benzyl group.

Preferable as R¹ and R² among these groups is an alkyl group, more preferable is an alkyl group having 4 or less carbon atoms, and particularly preferable is a methyl group.

In above formula (3), as the propylene or butylene group as R³ which may be substituted, a butylene group is preferable from the viewpoint of being easily available and being excellent in various adhesive performances. In the case of the propylene or butylene group having a substituent, the substituent is preferably an alkyl group, and more preferable is a methyl group. Examples of the propylene or butylene group having a substituent include -CH₂CH(CH₃)CH₂CH₂-.

The component (A) and the component (B) used in the present invention contain the above described maleimide groups, and accordingly, irradiation with an active energy beam leads to dimerization of the maleimide groups, so that the compound molecules are crosslinked to each other. Additionally, also in the case where crosslinking or curing (hereinafter these will be collectively referred to as "curing") is made with the aid of ultraviolet light or visible light, the dimerization reaction can be made to occur with the aid of irradiation with ultraviolet light or visible light without blending of a photopolymerization initiator or the like, or with blending of a small amount of a photopolymerization initiator or the like.

Additionally, the component (A) and the component (B) in the present invention are liquid at ordinary temperature; accordingly, handling including coating operation comes to be easy. On the contrary, compounds which are solid at ordinary temperature are not easy to handle, and additionally, lead to a high elastic modulus of the cured film and thus to insufficient adhesive performance. Meanwhile, it should be noted that ordinary temperature referred to in the present invention means 25°C.

The molecular weights of the component (A) and the component (B) are preferably 2,000 to 20,000 in terms of number average molecular weight, more preferably 3,000 to 10,000, and further preferably 3,000 to 8,000 in each case. When the number average molecular weight is less than 2,000, the pressure-sensitive adhesive strength and tackiness of the cured film are lowered as the case may be, while when the number average molecular weight exceeds 20,000, the viscosity of the composition becomes too high, and coatability is lowered as the case may be.

Here, it should be noted that the number average molecular weight referred to in the present invention is a value converted from the molecular weight measured by gel permeation chromatography (hereinafter abbreviated as GPC) by use of tetrahydrofuran as solvent with reference to the molecular weight of polystyrene.

As the component (A) and the component (B) to be used in the present invention, various compounds can be used as far as the compounds have the above described maleimide groups in each case. As the component (A) and the component (B), compounds prepared by means of various methods can be used; however, the following 3 types of compounds are preferable because of easiness in preparation.
(1) An addition reaction product (hereinafter referred to as compound (1)) between a prepolymer having two or more isocyanate groups at terminals and a compound having a maleimide group of any of the aforementioned formula (1) to formula (3) (hereinafter these will be collectively referred to simply as "maleimide group") and an active hydrogen group.
(2) An esterification reaction product (hereinafter referred to as compound (2)) between a prepolymer having two or more carboxylic groups at terminals and a compound having a maleimide group and an active hydrogen group.
(3) An esterification reaction product (hereinafter referred to as compound (3)) between a prepolymer having two or more hydroxy groups at terminals and a carboxylic acid having a maleimide group.

Now, description will be made below of the compounds (1) to (3).

### 1-1. Compound (1)

The compound (1) is an addition reaction product between a prepolymer (hereinafter simply referred to as urethane prepolymer) having two or more isocyanate groups at terminals and a compound (hereinafter simply referred to as a maleimide/active hydrogen compound) having a maleimide group and an active hydrogen group, and is prepared by reacting two or more moles of a maleimide/active hydrogen compound with 1 mole of a urethane prepolymer.

Description will be made below of the urethane prepolymer and the maleimide/active hydrogen compound.

### A) Urethane prepolymer

As the urethane prepolymer, various compounds can be used as far as the compounds each have two or more isocyanate groups at terminals of the molecule thereof.

The urethane prepolymer includes a reaction product between a polyol having two or more hydroxy groups (hereinafter simply referred to as polyol) and a polyisocyanate having two or more isocyanate groups (hereinafter simply referred to as polyisocyanate), and the like.

### a1) Polyol

The polyol includes polyester polyol, polyether polyol, polymer polyol prepared from radically polymerizable monomers, and the like. Among these, polyester polyol is preferable because the resultant cured film is low in viscosity, and the resultant pressure-sensitive adhesive is excellent in water resistance and heat resistance as well as adhesiveness.

As the polyol, two or more types of polyols can be used as required.

### a1-1) Polyester polyol

A polyester polyol is a random condensation copolymer between a polycarboxylic acid and a polyhydric alcohol. Among the polyester polyols, an aliphatic polyester polyol is preferable because of excellent curability by active energy beams of the resultant composition.

In this connection, as the polycarboxylic acid, various polycarboxylic acids can be used as far as the polycarboxylic acids each have two or more carboxyl groups in molecule thereof. Specific examples include succinic acid, adipic acid, pimelic acid, suberic acid, azelaic acid, sebacic acid, dodecanedioic acid, icosanedioic acid, 2,6-naphthalene dicarboxylic acid, trimellitic acid, glutaric acid, 1,9-nonane dicarboxylic acid, 1,10-decane dicarboxylic acid, malonic acid, fumaric acid, 2,2-dimethylglutaric acid, 1,3-cyclopentane dicarboxylic acid, 1,4-cyclohexane dicarboxylic acid, 1,3-cyclohexane dicarboxylic acid, itaconic acid, maleic acid, 2,5-norbornane dicarboxylic acid, 1,4-terephthalic acid, 1,3-terephthalic acid, dimeric acid and paraoxybenzoic acid.

Among these, aliphatic dicarboxylic acids are preferable, and adipic acid and sebacic acid are more preferable.

Two or more types of the polycarboxylic acids can be used in combination, as required.

As the polyhydric alcohol, various compounds can be used as far as the compounds each have two or more hydroxy groups in molecule thereof. Specific examples thereof include butylethylpropanediol, 2,4-diethyl-1,5-pentanediol, 3-methyl-1,5-pentanediol and polyethyleneglycol, ethyleneglycol, diethyleneglycol, triethyleneglycol, tetraethyleneglycol, 1,3-propanediol, 2-butyl-2-ethyl-1,3-propanediol, 1,2-butanediol, 1,3-butanediol, 1,4-butanediol, 1,5-pentanediol, 1,6-hexanediol, 1,7-heptanediol, 1,2-octanediol, 1,8-octanediol, 1,9-nonanediol, 1,2-decanediol, 1,10-decanediol, 2,2-dimethyl-1,3-propanediol, 2,2,4-trimethyl-1,6-hexanediol, 1,3-cyclohexanedimethanol and 1,4-cyclohexanedimethanol, dimeric acid diol and 2-methyl-1,8-octanediol.

Among these, aliphatic diols are preferable, and furthermore butylethylpropanediol, 2,4-diethyl-1,5-pentanediol, 3-methyl-1,5-pentanediol, dimeric acid diol and 2-methyl-1,8-octanediol are more preferable because the resultant compositions are low in viscosity and excellent in pressure-sensitive adhesiveness and water resistance.

Two or more types of polyhydric alcohols can be used in combination, as required.

As the component (A) and the component (B) of the present invention (hereinafter these will be collectively referred to as "maleimide compound"), as will be described later, a compound having a polyester skeleton is preferable, and detailed description will be made below of the method for preparing the polyester polyol that is the raw material for preparing the maleimide compound.

The method for preparing the polyester polyol can be in accordance with general esterification methods, and examples of the method include a method in which in the presence of a catalyst, a polycarboxylic acid and a polyhydric alcohol are heated under stirring, and the like.

As the catalyst, catalysts usually used in the esterification reaction can be used, and examples thereof include base catalysts, acid catalysts and metal alkoxides. Examples of the base catalyst include metal hydroxides such as sodium hydroxide and potassium hydroxide, and amines such as triethylamine, N,N-dimethylbenzylamine and triphenylamine. Examples of the acid catalyst include sulfuric acid and paratoluenesufonic acid. As the metal alkoxide, alkoxides of titanium, tin or zirconium are preferable. Specific examples of these metal alkoxides include tetraalkyl titanates such as tetrabutyl titanate; tin alkoxides such as dibutyltin oxide and monobutyltin oxide; and zirconium alkoxides such as zirconium tetrabutoxide and zirconium isopropoxide.

When an obtained pressure-sensitive adhesive composition is applied to bonding of packing materials for food and related matter, it is preferable that the addition amount of these catalysts is as small as possible.

Furthermore, among the above described catalysts, the titanium compounds are almost free from toxicity exhibited by heavy metals and can produce high molecular weight polyesters of practical use, and thus can be preferably used for the bonding of packing materials for food and related matter.

The reaction temperature and time in the esterification reaction may be appropriately set according to purposes. The reaction temperature is preferably 80 to 220°C.

As the aliphatic polyester polyols, commercially available ones can be used; examples thereof include "Kuraray Polyol P-5010" or "Kuraray Polyol P-5050" manufactured by Kuraray Co., Ltd., "KYOWAPOL 5000 PA" and "KYOWAPOL 3000 PA" manufactured by Kyowa Hakko Kogyo Co., Ltd., and "DYNACOLL 7250" manufactured by Degussa Japan Co., Ltd.

### a1-2) Polyether polyol

The polyether polyol include polyalkyleneglycols such as polyethyleneglycol, polypropyleneglycol, polybutyleneglycol and polytetramethyleneglycol; ethylene oxide-modified products, propylene oxide-modified products, butylene oxide-modified products and tetrahydrofuran-modified products of alkyleneglycols such as ethyleneglycol, propanediol, propyleneglycol, tetramethyleneglycol, pentamethyleneglycol, hexanediol, neopentylglycol, glycerin, trimethylolpropane, pentaerythritol, diglycerin, ditrimethylolpropane and dipentaerythritol; copolymers of ethylene oxide and propylene oxide, copolymers of propyleneglycol and tetrahydrofuran and copolymers of ethyleneglycol and tetrahydrofuran; hydrocarbon based polyols such as polyisopreneglycol, hydrogenated polyisopreneglycol, polybutadieneglycol and hydrogenated polybutadieneglycol; and polytetramethylenehexaglycerylether (tetrahydrofuran-modified products of hexaglycerin).

### a1-3) Polymer polyol

As the polymer polyol prepared from radically polymerizable monomers, mention may be made of polymers composed of monomers having an ethylenically unsaturated group and a hydroxy group as an indispensable component. Specific examples include those obtained by polymerizing radically polymerizable monomers, for example, hydroxyalkyl (meth)acrylates such as hydroxyethyl (meth)acrylate and hydroxypropyl (meth)acrylate with another (meth)acrylates.

The method for preparing the polymer polyol, includes methods in which radically polymerizable monomers are subjected to solution polymerization or high temperature continuous polymerization.

### a2) Polyisocyanate

As the polyisocyanate, various compounds can be used as far as the compounds each have two or more isocyanate groups in molecule thereof. Specific examples include p-phenylene diisocyanate, 4,4'-diphenylmethane diisocyanate, tolylene diisocyanate, 4,4'-diphenylene diisocyanate, 1,5-octylene diisocyanate, trimethylene diisocyanate, tetramethylene diisocyanate, hexamethylene diisocyanate, pentamethylene diisocyanate, 1,3-cyclopentane diisocyanate, 1,4-cyclohexane diisocyanate, 4,4'-methylene bis(cyclohexyl isocyanate), methyl-2,4-cyclohexane diisocyanate, methyl-2,6-cyclohexane diisocyanate, diphenylmethane diisocyanate, 1,4-bis(isocyanatomethyl)cyclohexane, 1,3-bis(isocyanatomethyl)cyclohexane, isophorone diisocyanate and carbodiimide-modified 4,4'-diphenylmethane diisocyanate.

Among these, alicyclic and aliphatic isocyanates are preferable because they are excellent in curability of the resultant pressure-sensitive adhesives with active energy beams and in weather resistance of the cured products. As the alicyclic or aliphatic isocyanates, hexamethylene diisocyanate and isophorone diisocyanate are preferable.

Two or more types of polyisocyanates can be used in combination, as required.

In the present invention, when the urethane prepolymer is prepared, the amount of the polyisocyanate in relation to the polyol falls within the range preferably from 1 to 3, more preferably from 1.8 to 3, particularly preferably from 2 to 2.5 in terms of the equivalence ratio of the group -NCO/the group -OH.

### a3) Method for preparing urethane prepolymer

The method for preparing the urethane prepolymer can follow the conventional methods. Examples of the methods include a method in which polyol and polyisocyanate are heated in the presence of a catalyst.

As the catalyst, the catalysts commonly used in urethanization reaction can be used; examples thereof include metal compounds and amines. Examples of the metal compounds include tin based catalysts such as dibutyltin laurate and tin dioctylate; lead based catalysts such as lead dioctylate; zirconium based catalysts such as K-KAT XC-4025 and K-KAT XC-6212 (manufactured by King Industries, Inc.); aluminum based catalysts such K-KAT XC-5217 (manufactured by King Industries, Inc.); and titanate based catalysts such as tetra-2-ethylhexyl titanate. Examples of the amines include triethylamine, N,N-dimethylbenzylamine, triphenylamine and triethylenediamine.

Additionally, when the urethane prepolymer is prepared, generally-used radical polymerization inhibitors such as hydroquinone and triethylamine can be used, as required, for the purpose of preventing gelation in the course of the reaction.

Furthermore, when the urethane prepolymer is prepared, phosphorus compounds can be blended. By blending phosphorus compounds, the action of the catalyst used in esterification and ring-opening polyaddition can be brought to a halt. If the catalyst is not deactivated, esterification reaction often occurs, when the obtained urethane prepolymer is stored in the presence of moisture or heated in the presence of moisture in a subsequent reaction, or when the resultant maleimide compound and cured product of the pressure-sensitive adhesive composition are stored in the presence of moisture, and thereby the physical properties of the pressure-sensitive adhesive composition are markedly degraded.

As the phosphorus compounds, mention may be made of inorganic or organic phosphorus compounds and the like listed in the following (a) to (e).

### (a) Phosphoric acid and the alkyl esters thereof

The phosphoric acid alkyl esters include trialkyl esters such as trimethyl phosphate, triethyl phosphate, tributyl phosphate, trinonyl phosphate, triphenyl phosphate and the like.

### (b) Organic esters of phosphonic acid

It includes dibutylbutyl phosphonate and the like. (c) Phosphorous acid

Phosphorous acid is used alone or in combination with other phosphorus compounds, which has the strongest effects of stabilizing hue and preventing oxidative degradation.

### (d) Organic esters of phosphorous acid

They include dibutyl hydrogen phosphate, triphenyl phosphite and the like. However, triphenyl phosphite sometimes degrades the properties of the polyester skeleton in the maleimide compound, and accordingly it is necessary to pay attention to the addition amount thereof.

### (e) Other inorganic phosphorus compounds

It includes polyphosphoric acid and the like.

The amount of a phosphorus compound to be added may be appropriately set according to molecular weight of the phosphorus compound (content of phosphorus atom); generally, the amount is preferably 0.001 to 3 parts by mass, and more preferably 0.01 to 1 part by mass, in relation to 100 parts by mass of the polyester polyol. When the addition amount of a phosphorus compound is less than 0.001 part by mass, no effect resulting from the addition can be found, while when the addition amount is larger than 3 parts by mass, no further increase of the effect is expected.

### B) Maleimide/active hydrogen compound

As the maleimide/active hydrogen compound, an alcohol having a maleimide group (hereinafter referred to as a maleimide alcohol) is preferable. As the maleimide alcohol, mention may be made of the maleimide alcohol represented by the following formula (4-1) to formula (4-3).

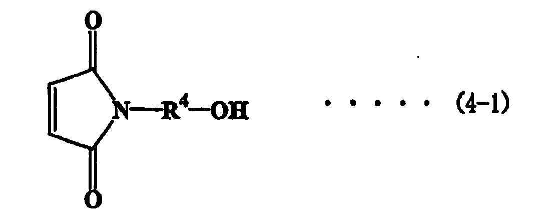

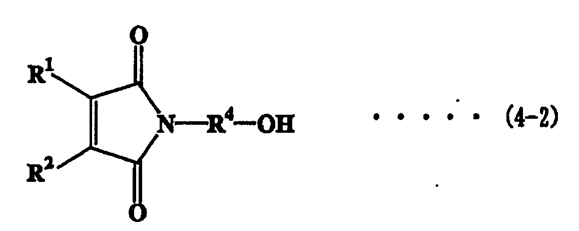

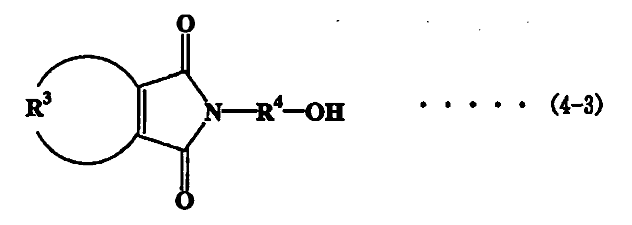

In formulas (4-1) to (4-3), R⁴ represents an alkylene group and is preferably a straight chain or branched chain alkylene group having 1 to 6 carbon atoms. In formula (4-2), R¹ and R² each represent the same group as described above, and in formula (4-3), R³ represents the same group as described above.

As the compound (1), a maleimide compound having a polyester skeleton, prepared by use of a urethane prepolymer the raw material of which is a polyester polyol, is preferable because it excels in curability with active energy beams and in water resistance of the cured film.

### C) Method for preparing the maleimide compound

As for the method for preparing the maleimide compound, the maleimide compound may be prepared by reacting a urethane prepolymer and a maleimide/active hydrogen compound with each other, according to generally-employed urethanization reaction. The specific urethanization reaction includes a method similar to that described above.

In the preparation of the maleimide compound, it is preferable that the reaction is carried out in the presence of an antioxidant for the purpose of preventing discoloration of the resultant maleimide compound.

The antioxidant includes generally used phenol based, triphosphite based and amine based antioxidants; for example, compounds described in Japanese Patent Publication Nos. S36-13738B, S36-20041B, S36-20042B and S36-20043B.

As the phenol based antioxidant, various types can be used, and the following compounds are particularly preferable: butylhydroxytoluene, pentaerythrityl tetrakis[3-(3,5-di-t-butyl-4-hydroxyphenyl)propionate], octadecyl-3-(3,5-di-t-butyl-4-hydroxyphenyl)propionate and the like.

The phenol based antioxidant can be used in combination with zinc oxide for the purpose of enhancing the effect.

The proportion of the antioxidant to be added is preferably 0.01 to 2 parts by mass in relation to the 100 parts by mass of the urethane prepolymer. When this proportion is less than 0.01 part by mass, a sufficient effect of blending of the antioxidant cannot be obtained as the case may be, while the blending with a proportion larger than 2 parts by mass can be expected to provide no further increase of effect, and hence is disadvantageous in cost.

Additionally, when the maleimide compound is prepared, the above described phosphorus compound may be blended.

### 1-2. Compound (2)

The compound (2) is an esterification reaction product between a prepolymer having two or more carboxyl groups at terminals thereof (hereinafter simply referred to as carboxylic acid prepolymer) and a maleimide/active hydrogen compound.

The carboxylic acid prepolymer includes one prepared by use of polycarboxylic acids and polyhydric alcohols as described above, and is preferably one having a polyester skeleton. The maleimide/active hydrogen compound includes the compounds similar to those described above.

The method for esterification between the carboxylic acid prepolymer and the maleimide/active hydrogen compound may follow the method similar to that described above.

The compound (2) is preferably used as a maleimide compound that is required to be lower in viscosity.

### 1-3. Compound (3)

The compound (3) is an esterification reaction product between a prepolymer having two or more hydroxy groups at terminals thereof (hereinafter simply referred to as polyol prepolymer) and a carboxylic acid having a maleimide group (hereinafter referred to as a maleimide carboxylic acid).

The polyol prepolymer includes those as described above in connection with the polyester polyol, and is preferably that having a polyester skeleton.

As the maleimide carboxylic acid, various types of compounds can be used, and the compounds represented by the following formulas (5-1) to (5-3) are preferable.

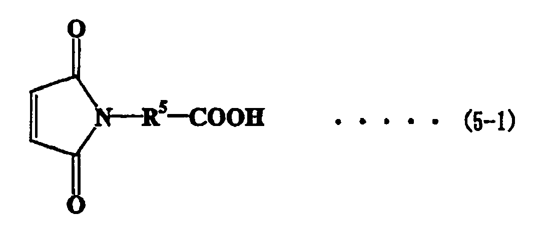

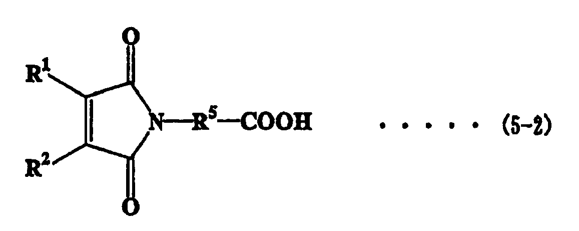

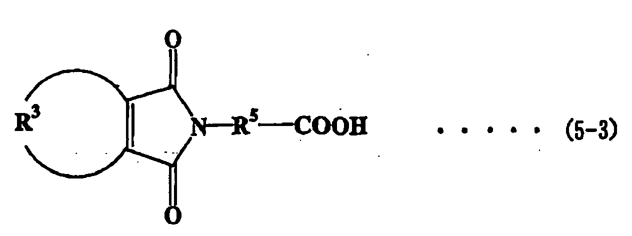

In each of formula (5-1) to formula (5-3), R⁵ represents an alkylene group, and is preferably a straight chain or branched chain alkylene group having 1 to 6 carbon atoms. In formula (5-2), R¹ and R² represent the same groups as described above, and in formula (5-3), R³ represents the same group as described above.

The esterification reaction between the polyol prepolymer and the maleimide carboxylic acid may follow the method as described above.

The compound (3) is preferably used as a maleimide compound that is required to be lower in viscosity.

### 1-4. Miscellaneous

Among the above described compounds (1) to (3), the compound (1) is preferable in that the compound (1) is faster in reaction rate, higher in yield and easier to prepare than the compounds (2) and (3). For applications where the maleimide compound is required to be low in viscosity, the compounds (2) and (3) are preferable.

The maleimide compound can be adjusted in terms of viscosity and fluidity as well as pressure-sensitive adhesive strength, holding power and tackiness of the cured film, by varying copolymerization composition depending upon purposes.

As the maleimide compound used in the present invention, various compounds can be used as far as the compounds have the above described maleimide groups; the compounds having a polyester skeleton are preferable because they are excellent in pressure-sensitive adhesive strength.

### 2. Pressure-sensitive adhesive composition curable with active energy beams

The composition of the present invention requires the component (A) and the component (B) as an indispensable component.

The proportions of the components (A) and (B) are such that, in relation to 100 parts by mass of the total amount of the components (A) and (B), the contents of the components (A) and (B) are preferably 20 to 40 and 80 to 60 parts by mass, respectively, and more preferably 25 to 35 and 75 to 65 parts by mass, respectively. When the content of the component (A) is less than 20 parts by mass, the curability of the composition is lowered and the cohesion force of the cured coating film is lowered as the case may be. On the other hand, when the content of the component (A) exceeds 40 parts by mass, the adhesiveness and the water resistance of the cured film are lowered as the case may be.

When the components (B-1) and (B-2) are used in combination as the component (B), the contents of the components (B-1) and (B-2) are preferably 10 to 90 and 90 to 10 parts by mass, respectively, in relation to 100 parts by mass of the total amount of the components (B-1) and (B-2).

The composition of the present invention can be composed of various components as required, in addition to the component (A) and the component (B). Now, description will be made below of the respective components

### 2-1. Photopolymerization initiator and the like

As described above, the composition of the present invention is easily curable with active energy beams; even when cured with ultraviolet light or visible light, the pressure-sensitive adhesive of the present invention has an excellent curability without blending of photopolymerization initiators or with blending of a small amount of a photopolymerization initiator, but can be blended with a photopolymerization initiator or the like as required.

In the case where a photopolymerization initiator is blended, examples of the photopolymerization initiator include benzoin and its alkyl ethers, acetophenones, anthraquinones, thioxanthones, ketals, benzophenones, xanthones, acylphosphine oxides, α-diketones and the like.

Additionally, for the purpose of improving the sensitivity to active energy beams, photosensitizers can be used.

As the photosensitizer, mention may be made of benzoic acid based photosensitizers, amine based photosensitizers, and the like. These photosensitizers can be used in combination of two or more thereof. The blending proportion of these photosensitizers is preferably 0.01 to 10 parts by mass in relation to 100 parts by mass of the maleimide compound.

As the photopolymerization initiator, benzophenones and thioxanthones are preferable because they are highly effective for improving the curing rate of the compositions.

### 2-2. Compounds having reactive unsaturated groups

For the purpose of enhancing the pressure-sensitive adhesive performance of the cured film, or for the purpose of adjusting the sensitivity of the composition, the present composition may contain a compound having a reactive unsaturated group such as (meth)acrylic monomer, (meth)acrylic oligomer and the like.

Examples of the (meth)acrylic monomer include alkyl acrylates or alkyl methacrylates (hereinafter acrylate or methacrylate will be referred to as (meth)acrylate), hydroxyalkyl (meth)acrylates, (meth)acrylates of phenol alkylene oxide adducts, mono or di(meth)acrylates of glycols, and polyol poly(meth)acrylates, poly(meth)acrylates of polyol alkylene oxide adducts.

Examples of the (meth)acrylic oligomer include urethane (meth)acrylate oligomers, polyester (meth)acrylate oligomers, and epoxy(meth)acrylate oligomers.

The proportion of the compound having a reactive unsaturated group to be added is preferably 50 parts by mass or less, and more preferably 20 parts by mass or less, in relation to 100 parts by mass of the maleimide compound.

### 2-3. Polymers

The composition of the present invention may be supplemented with a polymer for the purpose of adjusting the viscosity before curing or adjusting the pressure-sensitive adhesive performance after curing. There is no particular limitation to the polymer concerned, and examples of the polymer include (meth)acrylate based polymers, polystyrenes and polyolefins. Among these, (meth)acrylate based polymers having a maleimide group are preferable for the purpose of enhancing water resistance and heat resistance of the composition because these polymers form, upon curing, crosslinkage with the maleimide compound of the present invention.

### 2-4. Other maleimide compounds

The composition of the present invention may contain a compound having one maleimide group as far as curability with irradiation of active energy beams and performance of the cured film are not damaged.

Examples of the compound concerned include a compound having one maleimide group in a skeleton as described above, a compound having a maleimide group and an ethylenically unsaturated group, and the like.

In the case where the maleimide compound of the present invention is originated from a polymer polyol prepared from the above described radically polymerizable monomers, the polymer polyol is often a mixture of a polymer polyol having two or more hydroxy groups in a molecule and a polymer polyol having one hydroxy group in a molecule. In this case, the resultant compound is a mixture of a compound having two or more of maleimide groups and a compound having one maleimide group, and can be used as it is.

The blending proportion of the compound having one maleimide group is preferably 80 parts by mass or less and more preferably 50 parts by mass or less, in relation to 100 parts by mass of the total amount of the component

### (A) and the component (B).

Additionally, as far as curability with irradiation of active energy beams and performance of the cured film are not degraded, compounds having maleimide groups other than the above described maleimide groups can be used.

As compounds having such maleimide groups concerned, mention may be made of a compound having a maleimide group represented by the below described formula (6) or the like and having a skeleton as described above, a compound having a maleimide groups represented by the below described formula (6) or the like and an ethylenically unsaturated group, and the like. The blending proportions of these maleimide compounds are preferably 150 parts by mass or less, and more preferably 50 parts by mass or less, in relation to 100 parts by mass of the total amount of the component (A) and the component (B).

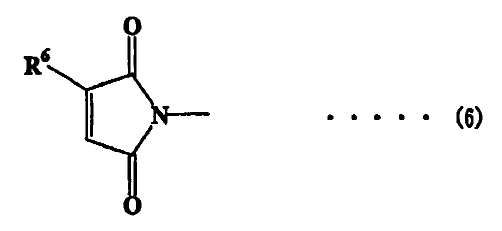

Here, in formula (6), R⁶ represents an alkyl group having 4 or less carbon atoms.

### 2-5. Tackifiers

The composition of the present invention may contain a tackifier for the purpose of lowering glass transition temperature (hereinafter abbreviated as Tg) or enhancing pressure-sensitive adhesive performance of the cured film.

As the tackifier, various substances can be used; examples thereof include natural resins such as rosin based resins and terpene based resins and the derivatives thereof, and synthetic resins such as petroleum resins. Among these, preferable are those compounds which have no double bond or are small in double bond content, because they do not inhibit the curing with active energy beams of the composition.

The blending proportion of the tackifier is preferably 20 parts by mass or less, and more preferably 10 parts by mass or less in relation to 100 parts by mass of the maleimide compound. When the blending proportion of the tackifier exceeds 20 parts, the viscosity of the composition becomes too high, and accordingly, the coatability and the heat resistance are degraded as the case may be.

### 2-6. Crosslinkers

The composition of the present invention may contain a crosslinker capable of reacting rapidly at ordinary temperature, for the purpose of forming crosslinkage between polymer molecules and enhancing heat resistance and water resistance. Examples of the crosslinker include polyisocyanate compounds, polyoxazoline compounds, epoxy resins, aziridine compounds, polycarbodimaleimide compounds and coupling agents.

### 2-7. Acid masking agents

When the maleimide compound is derived from a polyester, it is preferable that an acid masking agent is blended in the composition.

The ester bonds abundant in such compositions are hydrolyzed by the moisture and the molecular weight thereof is thereby lowered, in the case where the pressure-sensitive adhesive is used over a long period of time under a harsh condition such as high temperature or humidity; additionally, the acidic carboxylic groups generated by the hydrolysis further promote the hydrolysis of the ester bonds, and as is known, there are problems in that the pressure-sensitive adhesive strength is lowered, and when a pressure-sensitive adhesive article is peeled off, the lowered pressure-sensitive adhesive strength causes problems such that the pressure-sensitive adhesive layer undergoes the cohesion failure and after peeling off, the adhesive deposit is left on the matter that has been coated with the pressure-sensitive adhesive concerned.

In this case, blending of the acid masking agent can trap the carboxylic groups generated by the hydrolysis so that the hydrolysis can be prevented from further proceeding.

As the acid masking agent, mention may be made of carbodiimide compounds, oxazoline compounds, epoxy compounds, and the like.

The blending proportion of the acid masking agent is preferably 0.1 to 2 parts by mass in relation to 100 parts by mass of the maleimide compound. When this proportion is less than 0.1 part by mass, no sufficient effect of blending the acid masking agent is displayed as the case may be, while even when the blending proportion exceeds 2 parts by mass, no further effect can be expected, disadvantage to the cost thereby arises, and the masking agent exhibits a plasticizing effect, thereby causing the lowering of the pressure-sensitive adhesive performance of the cured product.

### 2-8. Ultraviolet light absorbers and light stabilizers

The composition of the present invention may contain an ultraviolet light absorber and a light stabilizer in order to improve light resistance.

Examples of the ultraviolet light absorber include benzotriazole based ultraviolet light absorbers, and more specifically, 2-(5-methyl-2-hydroxyphenyl)benzotriazole and 2-(3,5-di-t-amyl-2-hydroxyphenyl)benzotriazole.

Examples of the light stabilizer include hindered amine based light stabilizers and benzoate based light stabilizers. Examples of the hindered amine based light stabilizers include bis(1,2,2,6,6-pentamethyl-4-piperidinyl)sebacate and bis(1,2,2,6,6-pentamethyl-4-piperidinyl) 2-(3,5-di-t-butyl-4-hydroxybenzyl)2-n-butylmalonate. Examples of the benzoate based light stabilizer include 2,4-di-t-butylphenyl-3,5-di-t-butyl-4-hydroxybenzoate.

### 2-9. Miscellaneous

The composition of the present invention may contain a filler for the purpose of coloring and enhancing adhesive performance. Specific examples of the filler include various types of silica, dyes, calcium carbonate, magnesium carbonate, titanium oxide, iron oxides, glass fibers, and the like.

Additionally, according to use, radical polymerization inhibitors including hydroquinone and hydroquinone monomethyl ether may be blended.

In addition to these, the following common additives used in adhesives or pressure-sensitive adhesives can be simultaneously used in the proportions usually applied: antifoamers, dyes and pigments, thickeners, lubricants, film forming aids, fillers, plasticizers, antistatic agents, textile auxiliaries, detergents, antistatic agents, level dyeing agents, dispersion stabilizers, hydrophilic resins, latexes, wetting agents, leveling improvers and the like.

When the composition of the present invention is applied to medical care or the like, water, oil ingredients and the like may be added thereto for the purpose of regulating the adhesiveness thereof to the skin. Examples of the oil ingredients include: fatty acid such as myristic acid, palmitic acid, stearic acid, lauric acid and oleic acid, and the esters of these acids; and glycols. When applied to medical care, medicinal ingredients may also be blended with the composition concerned, and examples of such ingredients include antiinflammatory agents such as salicylic acid, indomethacin and ketoprofen; and nitroglycerin and nicotine.

Additionally, for the purpose of adjusting the viscosity, organic solvents can be blended as required.

Furthermore, the above described phosphorus compounds and antioxidants can be blended.

### 3. Method for producing pressure-sensitive adhesive sheets

The composition of the present invention can be used in various uses, and is used usually in a form of a pressure-sensitive adhesive sheet.

The pressure-sensitive adhesive sheet may be produced following the conventional methods. Examples of the preferable methods include a method in which the composition of the present invention is coated onto a substrate, and the coating concerned is irradiated with an active energy beam and thereby cured.

Examples of the substrate include metals, plastics, glass, ceramics, wood, paper, printing paper and fibers. Examples of the metals include aluminum, iron and copper; and examples of the plastics include vinyl chloride polymers, acrylate based polymers, polycarbonate, polyethylene terephthalate, acrylonitrile-butadienestyrene copolymer, polyethylene and polypropylene.

Examples of the coating method of compositions include roll coating, gravure printing, screen printing, die coating and knife coating.

The coating quantity of a composition for a substrate may be appropriately chosen according to the intended use; the coating quantity is preferably 5 to 200 g/m², and more preferably 10 to 100 g/m². When the coating quantity is less than 5 g/m², the pressure-sensitive adhesive strength often comes to be insufficient, while when the coating quantity is 200 g or more, the active energy beam can hardly reach the deep portion and accordingly the intended performance cannot be obtained as the case may be.

After the completion of the coating process, an active energy beam is irradiated and the maleimide groups of the maleimide compound are thereby crosslinked to each other to increase the molecular weight, so that the cohesion force and the pressure-sensitive adhesive strength of the obtained cured film are enhanced.

The method for irradiating the active energy beam in this case may follow the method applied to the conventional pressure-sensitive adhesive composition curable with active energy beams. Examples of the active energy beam include visible light, ultraviolet light, X-ray and electron beam; it is preferable to use ultraviolet light, for which an inexpensive device can be used. Examples of the light source for the case where ultraviolet light is used include an ultra high pressure mercury lamp, a high pressure mercury lamp, a medium pressure mercury lamp, a low pressure mercury lamp, a metal halide lamp, a xenon lamp, an electrodeless discharge lamp and a carbon arc lamp; it is sufficient to irradiate for a few seconds to a few minutes.

Additionally, the Tg of the cured film made of the composition of the present invention is preferably -10°C or below, and more preferably -30°C or below. Herein, it should be noted that the Tg referred to in the present invention means the peak temperature of the tanδ obtained by measuring the temperature dependence by use of a dynamic viscoelasticity measurement apparatus.

### 4. Applications

The pressure-sensitive adhesive composition of the present invention can be used for various applications.

Examples of the applications include pressure-sensitive adhesive products made of pressure-sensitive adhesive tapes, pressure-sensitive adhesive labels and pressure-sensitive adhesive sheets; examples of these pressure-sensitive adhesive products include pressure-sensitive adhesive sheets for use in confidential post cards, pressure-sensitive adhesive sheets for use in wallpaper, pressure-sensitive adhesive double coated tapes, seals, stickers and masking films.

In particular, the pressure-sensitive cured film of the present invention is excellent in water resistance, and accordingly useful for production of pressure-sensitive adhesives for use in the applications requiring water resistance, more specifically, seals for canned beverage containers, and advertising displays and stickers for vehicles both used in the outdoors. Additionally, the pressure-sensitive adhesive composition of the present invention is high in safety, and hence can be preferably used as the pressure-sensitive adhesive used for the tapes and the like directly affixed to the skin. Specific examples include the following articles: first aid plasters; magnetic plasters; surgical tapes used for fixing gauze or a catheter to the body; wound-healing dressing materials (dressings) used in the curing in which the wound is tightly covered for preventing the wound from being infected from the outside, simultaneously easing the pain, and keeping the wound in a wet condition; tapes for sport taping for protecting and reinforcing injured portions of joints and muscle for the purpose of the prevention of the injury at the time of exercise, the first aid treatment, the prevention of recurrence (rehabilitation), and the like; and the tape preparations used in transdermal therapeutic systems in which medicine is absorbed through the skin and delivered into the body.

The advantages of the present invention are summarized as follows. According to the present pressure-sensitive adhesive composition curable with active energy beams, the adhesive concerned is liquid at ordinary temperature, so that it is easy to handle, excellent in coatability; and even when irradiated with visible light or ultraviolet light, it has a practical crosslinking property and a practical curability in the absence of a photopolymerization initiator, so that it is low in unfavorable odor and toxicity, and safe. Additionally, the obtained cured film has characteristics such that it is excellent in pressure-sensitive adhesive performances, particularly excellent in constant-load holding power as well as excellent in water resistance and heat resistance.

### Best Mode for Carrying out the Invention

More specific description of the present invention will be made below with reference to the examples and comparative examples.

Meanwhile, it should be noted that, in the following, "parts" means "parts by mass".

### Example 1

In a flask equipped with a stirrer, a thermometer and a condenser, 300 g of a polyester polyol, namely, Kuraray Polyol P-5050 (polyester diol as a reaction product between 1,3-methyl-1,5-pentanediol and sebacic acid; number average molecular weight: 5000; hydroxy group value: 22.7 (mgKOH/g); manufactured by Kuraray Co., Ltd.) was placed at room temperature, heated to raise the temperature up to 120°C while being stirred, and dehydrated for 1 hour under reduced pressure.

After dehydration, the dehydrated matter was cooled to 80°C, combined with 28.3 g of isophorone diisocyanate (hereinafter referred to as IPDI), mixed together for 1 hour, and then supplemented with 0.035 g of di-n-butyltin dilaurate (hereinafter referred to as DBTL) to allow the reaction to proceed for 2 hours.

To the reaction mixture thus obtained, 5.64 g of 2-hydroxyethyl maleimide (a compound represented by the following formula (7); hereinafter referred to as MT-ETA) and 17.36 g of 2-hydroxyethyltetrahydrophthalimide (a compound represented by the following formula (8); hereinafter referred to as HT-ETA) were further added, and the reaction was allowed to proceed for 2 hours to produce a maleimide compound.

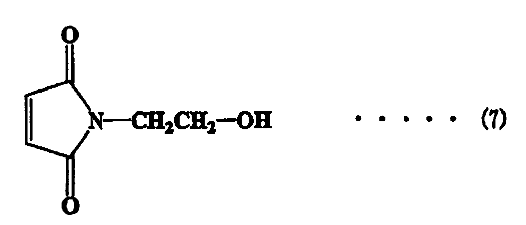

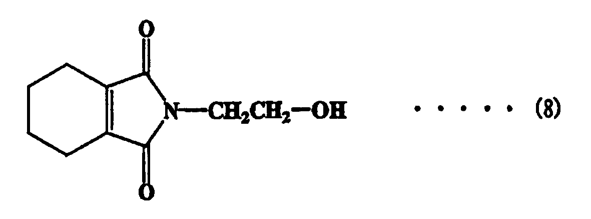

Consequently, there was obtained a composition which contained the component (A) and the component (B) in a mass ratio of 30:70. The viscosity of this composition at 25°C was 750,000 mpa·S and the number average molecular weight thereof was about 6000.

By use of the obtained composition, the following evaluations were carried out. The results are shown in Table 1.

### Evaluation

Onto the surface of a 50 µm thick polyester film as a substrate sheet, a pressure-sensitive adhesive was applied so as to have a thickness of 45 µm, and ultraviolet light was irradiated from the coating surface side by passing the sheet 5 times under a 80 W/cm light condensing high pressure mercury lamp (one lamp; 10 cm high) at a conveyer speed of 10 m/min. The sheet thus obtained was cut into a 200 mm long and 25 mm wide specimen.

By use of the obtained specimen, the following tests were carried out. The results are shown in Table 1.

### (1) Pressure-sensitive adhesive strength

The 180 degree peeling strength of the specimen was measured in such a way that under the conditions of 23°C and 65% RH, the 100 mm long portion of the specimen was bonded to a SUS plate and was allowed to stand for 24 hours, and then the strength was measured in accordance with JIS Z-0237.

### (2) Holding power

A 25 mm long portion of the specimen was bonded to a SUS plate similarly to (1), and allowed to stand for 30 minutes; and then a 1000 g weight was suspended from an end of the specimen in an atmosphere of 80°C, and the weight fall time in 24 hours was measured, or when the specimen was retained, the displacement distance was measured, to evaluate the heat resistance in accordance with JIS Z-0237.

### (3) Constant-load holding power

A 100 mm long portion of the specimen was bonded to a SUS plate similarly to (1), and allowed to stand 30 minutes; and then the boned assembly was horizontally kept with the specimen-bonded side down in an atmosphere of 40°C, and a 200 g weight was suspended from an end of the non-bonded portion of the specimen; and the weight fall time in 1 hour was measured, or when the specimen was retained, the peeled distance of the specimen was measured.

### (4) Tack

In conformity with JIS Z-0237 for the ball rolling method, measurements were made in the atmosphere of 23°C and 65% RH.

### (5) Water resistance

The specimen was bonded under the conditions similar to those in the above described (1) and allowed to stand for 1 day, and then further immersed for 1 day in distilled water at 80°C; then the specimen was taken out and put again under the conditions of 23°C and 65% RH, and subsequently the pressure-sensitive adhesive strength was measured in the same manner as in (1). The lowering ratio of the thus-obtained pressure-sensitive adhesive strength with reference to the pressure-sensitive adhesive strength of (1) was calculated and evaluated on the basis of the following 3 grades.

G: The lowering ratio of the pressure-sensitive adhesive strength was less than 20%.

M: The lowering ratio of the pressure-sensitive adhesive strength was 20% or more and less than 50%.

P: The lowering ratio of the pressure-sensitive adhesive strength was 50% or more.

### Production Example 1

The reaction was carried out in the same manner as in Example 1 except that only 18.79 g of MT-ETA was used to produce a maleimide compound as the component (A).

The viscosity at 25°C of this compound was 600,000 mpa·S and the number average molecular weight thereof was about 6000. This compound is referred to as A1.

### Production Example 2

The reaction was carried out in the same manner as in Example 1 except that only 24.8 g of HT-ETA was used to produce a maleimide compound of the present invention as the component (B).

The viscosity at 25°C of this compound was 900,000 mpa·S and the number average molecular weight thereof was about 6000. This compound is referred to as B1.

### Production Example 3

The reaction was carried out in the same manner as in Example 1 except that only 20.50 g of hydroxyethyl-2,3-dimethyl maleimide (a compound represented by the following formula (9); hereinafter referred to as DM-ETA) was used in place of MT-ETA and HT-ETA to produce a maleimide compound as the component (B).

The viscosity at 25°C of this compound was 820,000 mpa·S and the number average molecular weight thereof was about 6000. This compound is referred to as B2.

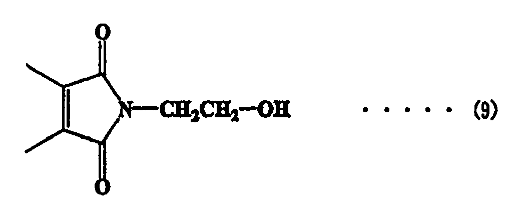

### Examples 2 to 7

The respective components A1, B1 and B2 produced in the Production Examples were mixed together under stirring at a mass ratio shown in Table 1, to obtain a composition.

By use of the compositions thus obtained, evaluations were made in the same manner as in Example 1. The results are shown in Table 1.

### Comparative Examples 1 to 3

Evaluations were made in the same manner as in Example 1, except that only one of A1 obtained in Production Example 1 (Comparative Example 1), B1 obtained in Production Example 2 (Comparative Example 2), and B2 obtained in Production Example 3 (Comparative Example 3) was used. The results are shown in Table 1.

**Table 1**

| | Composition | | | Evaluation results | | | | |
|---|---|---|---|---|---|---|---|---|
| | Component (A) [state] (parts) | Component (B) [state] (parts) | State of pressure-sensitive adhesive | Pressure-sensitive adhesive strength¹⁾ | Constant-load holding power | Holding power | Tack | Water resistance |
| Ex. 1 | A1 (30) | B1 (70) | Liquid | 1,600 | Displaced 10 mm | No displacement | 10 | O |
| Ex. 2 | A1 [liquid] (20) | B1 [liquid] (80) | Liquid | 1,800 | Weight fall after 20 min | Weight fall after 300 min | 11 | O |
| Ex. 3 | A1 [liquid] (25) | B1 [liquid] (75) | Liquid | 1,750 | Displaced 8 mm | No displacement | 10 | O |
| Ex. 4 | A1 [liquid] (30) | B1 [liquid] (70) | Liquid | 1,720 | Displaced 6 mm | No displacement | 10 | O |
| Ex. 5 | A1 [liquid] (35) | B1 [liquid] (65) | Liquid | 1,450 | Weight fall after 50 min | No displacement | 10 | O |
| Ex. 6 | A1 [liquid] (40) | B1 [liquid] (60) | Liquid | 1,350 | Weight fall after 20 min | No displacement | 8 | O |
| Ex. 7 | A1 [liquid] (30) | B2 [liquid] (70) | Liquid | 1,550 | Displaced 20 mm | No displacement | 8 | O |
| Com. Ex. 1 | A1 [liquid] (100) | - | Liquid | 350 | Weight fall within 10 min | No displacement | 6 | Δ |
| Com. Ex. 2 | - | B1 [liquid] (100) | Liquid | -²⁾ | - | - | - | - |
| Com. Ex. 3 | - | B2 [liquid] (100) | Liquid | -²) | - | - | - | - |

| | | | | | | | | |
|---|---|---|---|---|---|---|---|---|
| 1) Unit: g/inch | | | | | | | | |
| 2) Not cured | | | | | | | | |

### Industrial Applicability

The composition of the present invention can be applied to various fields of pressure-sensitive adhesion as a pressure-sensitive adhesive composition curable with active energy beams.

## Claims

1. A pressure-sensitive adhesive composition curable with active energy beams, comprising a plurality of compounds which each have two or more maleimide groups and are liquid at ordinary temperature, wherein the plurality of compounds comprise (A) a compound which has maleimide groups represented by the following formula (1), and (B) a compound which has maleimide groups represented by the following formula (2), and/or a compound which has maleimide groups represented by the following formula (3) : 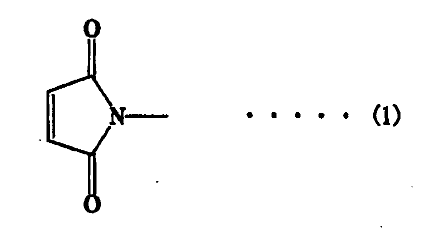 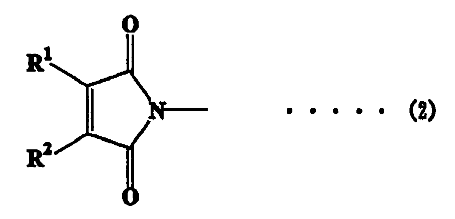
where in formula (2), R¹ and R² each represent an alkyl group, an aryl group, an arylalkyl group or a halogen atom; 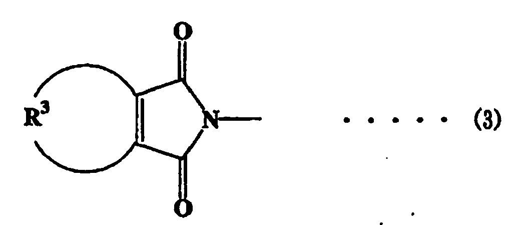
where in formula (3), R³ represents a propylene or butylene group which may have a substituent.

2. The pressure-sensitive adhesive composition curable with active energy beams according to claim 1, in which R¹ and R² in said formula (2) are each an alkyl group.

3. The pressure-sensitive adhesive composition curable with active energy beams according to claim 1, in which R³ in said formula (3) is a butylene group.

4. A pressure-sensitive adhesive composition curable with an active energy beam, according to any one of claims 1 to 3, in which said component (A) and/or component (B) is a compound having a polyester skeleton.

5. A pressure-sensitive adhesive composition curable with an active energy beam, according to claim 4, in which said component (A) and/or component (B) is one or more selected from the compounds described in the following (1) to (3):
(1) an addition reaction product between a polyester based prepolymer having two or more isocyanate groups at terminals thereof and a compound having a maleimide group and an active hydrogen group;
(2) an esterification reaction product between a polyester based prepolymer having two or more carboxyl groups at terminals thereof and a compound having a maleimide group and an active hydrogen group; and
(3) an esterification reaction product between a polyester based prepolymer having two or more hydroxy groups at terminals thereof and a carboxylic acid having a maleimide group.

6. A pressure-sensitive adhesive composition curable with an active energy beam, according to any one of claims 1 to 5, in which said component (A) and/or component (B) is one having a number average molecular weight of 2,000 to 20,000.

7. A pressure-sensitive adhesive sheet, comprising a substrate and a pressure-sensitive adhesive layer formed on the substrate by coating onto the substrate the pressure-sensitive adhesive composition defined in any one of claims 1 to 6, and irradiating said coating with an active energy beam to crosslink or cure said coating.
